# EUROPEAN PATENT SPECIFICATION

(11) **EP 3 461 582 B1**
(45) Date of publication and mention of the grant of the patent: **04.11.2020**
(21) Application number: 18192299.8
(22) Date of filing: 03.09.2018
(51) Int. Cl.: B23P 9/02, C21D 7/06, F01D 5/06, B21D 26/08, B24C 1/10, F01D 25/24, F23R 3/60, C21D 7/08

(54) **METHODS FOR TREATING AN ENGINE FLANGE**
VERFAHREN ZUR BEHANDLUNG EINES TRIEBWERKSFLANSCHES
PROCÉDÉS DE TRAITEMENT D'UNE BRIDE DE MOTEUR

(30) Priority: 28.09.2017 US 201715719357
(43) Date of publication of application: 03.04.2019
(73) Proprietor: United Technologies Corporation, Farmington, CT 06032 (US)
(72) Inventor: SCHOBER, Michael J, Vernon, CT Connecticut 06066 (US); LEMOINE, Jonathan, Vernon, CT Connecticut 06066 (US); MIDGLEY, James R, Cromwell, CT Connecticut 06416 (US)
(74) Representative: Dehns

(56) References cited:
- EP-A1- 3 103 972
- GB-A- 1 218 116
- JP-A- H04 173 918
- US-A1- 2003 167 617
- US-A1- 2011 116 931

## Description

### FIELD

This disclosure generally relates engine flanges.

### BACKGROUND

Fixed engine flanges in gas turbine engines are exposed to significant heat and pressure loads. Because such engine flanges comprise bolt holes to couple the engine flange to the rest of the engine, the area around the bolt holes may be vulnerable to stress and eventual cracking or breaking. Therefore, the area around engine flange bolt holes may be strengthened to withstand such heat and pressure loads.

US 2011/116931 A1 discloses a prior art method according to the preamble of claim 1. JP H04 173918 A, US 2003/167617 A1, and GB 1 218 116 A disclose other prior art methods.

### SUMMARY OF THE INVENTION

The present invention provides a method as claimed in claim 1.

In various embodiments, the plurality of shot may comprise a plurality of metal beads. In various embodiments, the method may further comprise expanding an original bolt hole diameter defined by the bolt hole circumference to a deformed bolt hole diameter, wherein the deformed bolt hole diameter may be about 0.010 inch (0.025 cm) greater than the original bolt hole diameter.

In various embodiments, the providing the M-flange may comprise removing the M-flange from the gas turbine engine. In various embodiments, the method may further comprise replacing the M-flange comprising the plastically deformed bolt hole onto the gas turbine engine. In various embodiments, the providing the M-flange may comprise providing the M-flange comprising a scallop disposed on the outer diameter of the M-flange.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures. Elements with the like element numbering throughout the figures are intended to be the same.
FIG. 1 illustrates a gas turbine engine;
FIG. 2 illustrates a perspective view of a combustor section of a gas turbine engine;
FIG. 3A illustrates a partial perspective view of an M-flange of a gas turbine engine;
FIG. 3B illustrates a perspective view of an M-flange portion comprising one bolt hole;
FIG. 4A illustrates a system for shot peening a bolt hole of an M-flange;
FIG. 4B illustrates a system for burnishing a bolt hole of an M-flange;
FIG. 4C illustrates a system for split sleeve treating a bolt hole of an M-flange;
FIG. 4D illustrates a method of treating a bolt hole of an M-flange using an explosive powder;
FIG. 5 depicts a block diagram illustrating a method of treating an M-flange;
FIG. 6 depicts a block diagram illustrating an additional method of treating an M-flange; and
FIG. 7 depicts a block diagram illustrating yet another method of treating an M-flange.

### DETAILED DESCRIPTION

All ranges may include the upper and lower values, and all ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

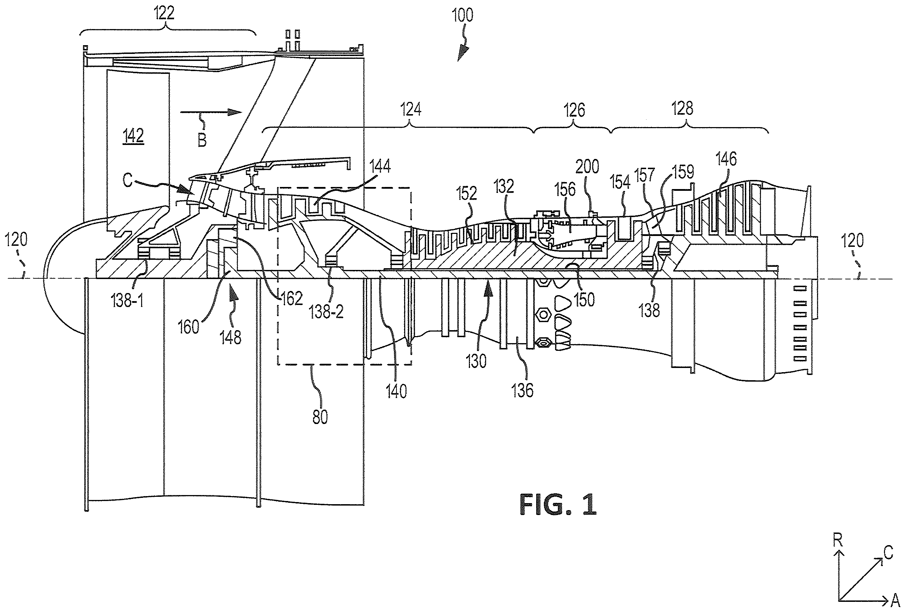

With reference to FIG. 1, a gas turbine engine 100 is disclosed. As used herein, "aft" refers to the direction associated with a tail (e.g., the back end) of an aircraft, or generally, to the direction of exhaust of gas turbine engine 100. As used herein, "forward" refers to the direction associated with a nose (e.g., the front end) of the aircraft, or generally, to the direction of flight or motion. An A-R-C axis has been included to illustrate the axial (A), radial (R) and circumferential (C) directions. For clarity, axial axis A spans parallel to axis of rotation 120. As utilized herein, radially inward refers to the negative R direction towards axis of rotation 120, and radially outward refers to the R direction away from axis of rotation 120.

Gas turbine engine 100 may comprise a two-spool turbofan that generally incorporates a fan section 122, a compressor section 124, a combustor section 126, and a turbine section 128. Combustor section 126 may comprise an M-flange 200, where and by which components from combustor section 126 and turbine section 128 may be coupled. Gas turbine engine 100 may also comprise, for example, an augmenter section, and/or any other suitable system, section, or feature. In operation, fan section 122 may drive air along a bypass flow-path B, while compressor section 124 may further drive air along a core flow-path C for compression and communication into combustor section 126, before expansion through turbine section 128. FIG. 1 provides a general understanding of the sections in a gas turbine engine, and is not intended to limit the disclosure. The present disclosure may extend to all types of applications and to all types of turbine engines, including, for example, turbojets, turboshafts, and three spool (plus fan) turbofans wherein an intermediate spool includes an intermediate pressure compressor ("IPC") between a low pressure compressor ("LPC") and a high pressure compressor ("HPC"), and an intermediate pressure turbine ("IPT") between the high pressure turbine ("HPT") and the low pressure turbine ("LPT").

Gas turbine engine 100 may comprise a low speed spool 130 and a high speed spool 132 mounted for rotation about an axis of rotation 120 relative to an engine static structure 136 via one or more bearing systems 138 (shown as, for example, bearing system 138-1 and bearing system 138-2 in FIG. 1). It should be understood that various bearing systems 138 at various locations may alternatively or additionally be provided, including, for example, bearing system 138, bearing system 138-1, and/or bearing system 138-2.

Low speed spool 130 may comprise an inner shaft 140 that interconnects a fan 142, a low pressure (or a first) compressor section 144, and a low pressure (or a second) turbine section 146. Inner shaft 140 may be connected to fan 142 through a geared architecture 148 that can drive fan 142 at a lower speed than low speed spool 130. Geared architecture 148 may comprise a gear assembly 160 enclosed within a gear housing 162. Gear assembly 160 may couple inner shaft 140 to a rotating fan structure. High speed spool 132 may comprise an outer shaft 150 that interconnects a high pressure compressor ("HPC") 152 (e.g., a second compressor section) and high pressure (or a first) turbine section 154. A combustor 156 may be located between HPC 152 and high pressure turbine 154. A mid-turbine frame 157 of engine static structure 136 may be located generally between high pressure turbine 154 and low pressure turbine 146. Mid-turbine frame 157 may support one or more bearing systems 138 in turbine section 128. Inner shaft 140 and outer shaft 150 may be concentric and may rotate via bearing systems 138 about axis of rotation 120. As used herein, a "high pressure" compressor and/or turbine may experience a higher pressure than a corresponding "low pressure" compressor and/or turbine.

The air along core airflow C may be compressed by low pressure compressor 144 and HPC 152, mixed and burned with fuel in combustor 156, and expanded over high pressure turbine 154 and low pressure turbine 146. Mid-turbine frame 157 may comprise airfoils 159 located in core airflow path C. Low pressure turbine 146 and high pressure turbine 154 may rotationally drive low speed spool 130 and high speed spool 132, respectively, in reaction to the expansion exhaust gases.

Gas turbine engine 100 may comprise a high-bypass ratio geared aircraft engine. The bypass ratio of gas turbine engine 100 may also be greater than ten (10:1). Geared architecture 148 may be an epicyclic gear train, such as a star gear system (sun gear in meshing engagement with a plurality of star gears supported by a carrier and in meshing engagement with a ring gear) or other gear system. Geared architecture 148 may have a gear reduction ratio of greater than about 2.3 and low pressure turbine 146 may have a pressure ratio that is greater than about five (5). The diameter of fan 142 may be significantly larger than that of the low pressure compressor section 144, and the low pressure turbine 146 may have a pressure ratio that is greater than about five (5:1). The pressure ratio of low pressure turbine 146 is measured prior to inlet of low pressure turbine 146 as related to the pressure at the outlet of low pressure turbine 146. It should be understood, however, that the above parameters are exemplary of various embodiments of a suitable geared architecture engine and that the present disclosure contemplates other turbine engines including direct drive turbofans.

The next generation turbofan engines are designed for higher efficiency and use higher pressure ratios and higher temperatures in high pressure compressor 152 than are conventionally experienced. These higher operating temperatures and pressure ratios create operating environments that cause thermal loads that are higher than the thermal loads conventionally experienced, which may shorten the operational life of current components, including flanges comprised in gas turbine engine 100.

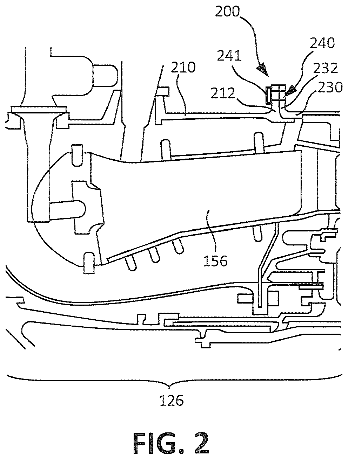

FIG. 2 depicts an enlarged view of combustor section 126 of a gas turbine engine, comprising combustor 156. With combined reference to FIGS. 1 and 2, an M-flange 200 (an example of a static or fixed flange in gas turbine engine 100) may be mounted about axis of rotation 120 as a structural component, coupled to various other components of the gas turbine engine. M-flange 200 may comprise diffuser case flange 212 of diffuser case 210 and HPT flange 232 of HPT case 230. M-flange 200 may couple diffuser case flange 212 to HPT flange 232. Diffuser case flange 212 and HPT flange 232 may be coupled by inserting a bolt 241 through a bolt hole 240.

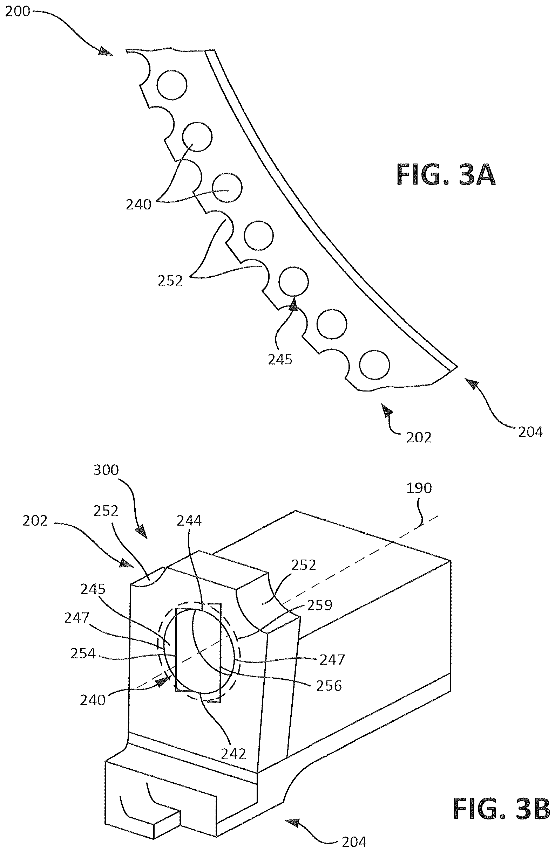

FIG. 3A depicts a portion of M-flange 200. M-flange 200 may comprise an outer diameter 202 and an inner diameter 204 about axis of rotation 120 (depicted in FIG. 1). M-flange 200 may comprise bolt holes 240 disposed along M-flange 200 between inner diameter 204 and outer diameter 202. Each bolt hole 240 is defined by a bolt hole circumference 245. M-flange 200 may comprise scallops 252, which may be disposed on outer diameter 202 of M-flange 200.

With combined reference to FIGS. 2, 3A, and 3B (with FIG. 3B depicting a section 300 M-flange 200 comprising one bolt hole 240), M-flange 200 may experience extreme heat load from combustor 156, such as on the order of 1100°F (593°C), as well as pressure load from such heat and the airflow traveling through the gas turbine engine. Therefore, the material comprised in M-flange 200 proximate inner diameter 204, which is more proximate to combustor 156 than outer diameter 202, may tend to expand in response to exposure to the extreme heat and pressure loads from combustor 156. However, outer diameter 202 is not exposed to the same magnitude of such heat and pressure loads as inner diameter 204, and therefore, the material proximate to outer diameter 202 does not experience the same amount of stress, and thus, tends to remain static. The load differences experienced between outer diameter 202 and inner diameter 204 may cause significant stress for material at a radially inward area 242 and a radially outward area 244 on bolt hole circumference 245. Side areas 247 on bolt hole circumference 245 experience significantly less stress. The stress experienced at radially inward area 242 and radially outward area 244 tends to cause cracks and breakage in M-flange 200, causing the life of M-flange 200 to suffer.

Scallops 252 may function to weaken outer diameter 202 of M-flange 200 so that if there is a crack or breakage resulting from the stress experienced by radially inward area 242 and radially outward area 244, such a crack or breakage will occur on radially outward area 244, and therefore, will be more easily identifiable as it is on the exterior of M-flange 200 and the gas turbine engine. A crack or breakage on inner diameter 204 may not be detectable by manual inspection, posing significant safety risks, such as M-flange failure during gas turbine engine operation (e.g., during aircraft take-off or flight). Accordingly, the strengthening of M-flange 200 material proximate bolt hole circumference 245, especially proximate radially inward area 242 and radially outward area 244 may be beneficial to extend M-flange 200 life and mitigate against safety risks associated with M-flange 200 cracking and/or breaking.

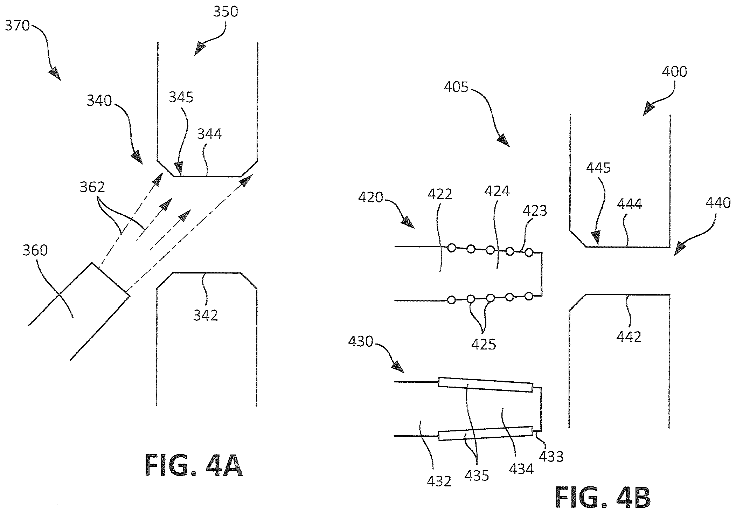

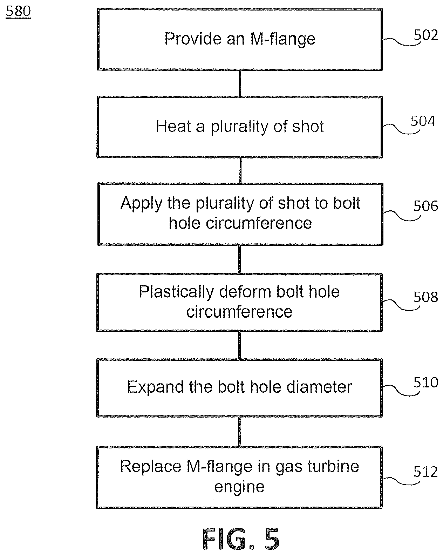

The M-flange 200 material proximate bolt holes 240 and bolt hole circumference 245 may be treated in a number of ways to improve the strength of the material. FIG. 5 depicts a block diagram illustrating a method 580 of treating an M-flange. With combined reference to FIGS. 4A and 5, an M-flange 350 (similar to M-flange 200 in FIG. 2) may be obtained, manufactured, and/or provided (step 502). M-flange 350 may be provided by removing M-flange 350 from a gas turbine engine to perform the steps of method 580 on M-flange 350, or M-flange 350 may not come from an M-flange already installed on a gas turbine engine. A system 370 for treating a bolt hole 340 of M-flange 350 may comprise a projector 360 and shot 362 (which may comprise a plurality of hard beads comprising a hard material such as a metal or ceramic material). A plurality of shot 362 is applied to bolt hole circumference 345 (step 586). Plurality of shot 362 may be applied around the entirety of bolt hole circumference 345. Plurality of shot 362 may be applied at radially inward area 342 and/or radially outward area 344. According to the present invention, plurality of shot 362 is applied only at radially inward area 342, and radially inward area 342 of bolt hole 340 may be strengthened, therefore, tending to cause any cracks and/or breakages to occur proximate radially outward area 344, making detection by inspection more likely.

The material proximate bolt hole circumference 345 is plastically deformed (step 588), therefore strengthening such material, in response to applying the plurality of shot to bolt hole circumference 345. The plastic deformation may cause bolt hole circumference 345 to expand, expanding the diameter of bolt hole 340 (step 590) from an original bolt hole diameter (e.g., original diameter 254 in FIG. 3B) to a deformed bolt hole diameter (e.g., deformed bolt hole diameter 256 in FIG. 3B). The deformed bolt hole diameter may be about 0.010 inch (0.025 centimeter (cm)) greater than the original bolt hole diameter. As used in this context, the term "about" means within plus or minus 0.005 inch (0.013 cm). Plurality of shot 362 is heated (step 584) before applying the plurality of shot 362 to bolt hole circumference 345. Heating the plurality of shot 362 before application may allow less pressure to be applied by shot 362 to bolt hole circumference 345 in order to plastically deform the material proximate bolt hole circumference 345. M-flange 350 comprising plastically deformed bolt holes may be replaced on a gas turbine engine (step 592). The plastically deformed bolt holes may increase the strength of the material proximate bolt hole circumference 345. Method 580 may improve the life of M-flange 350 by two times when utilized in a gas turbine engine (e.g., from 6,500 engine cycles to 13,000 engine cycles, wherein an engine cycle comprises a flight of the aircraft comprising the gas turbine engine).

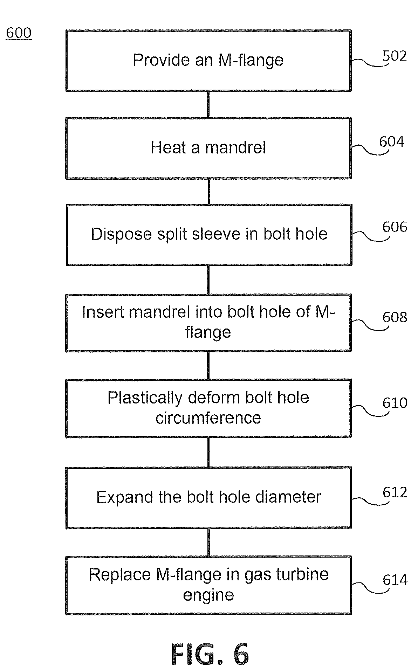

FIG. 6 depicts a block diagram illustrating a method 600 of treating an M-flange 400 falling outside the scope of claims. With combined reference to FIGS. 4B and 6, an M-flange 400 (similar to M-flange 200 in FIG. 2) may be obtained, manufactured, and/or provided (step 502), as explained in relation to FIG. 5. A system 405 for treating a bolt hole 440 of M-flange 400 may comprise a burnishing tool (e.g., burnishing tool 420 and/or 430). Burnishing tool 420 may comprise a mandrel 422 having a mandrel end 424, which may be tapered such that the diameter of mandrel end 424 is smaller than the other portions of mandrel 422. Mandrel end 424 may comprise an outer edge 423. A rotating device, such as rotating balls 425 may be coupled to outer edge 423. Burnishing tool 430 may comprise a mandrel 432 having a mandrel end 434, which may be tapered such that the diameter of mandrel end 434 is smaller than the other portions of mandrel 432. Mandrel end 434 may comprise an outer edge 433. A rotating device, such as rollers 435 may be coupled to outer edge 433.

The mandrel may be inserted into bolt hole 440 (step 608) such that the outer edge of the mandrel (e.g., outer edge 423 of mandrel 422 and/or outer edge 433 of mandrel 432) contacts bolt hole circumference 445, including radially inward area 442 and radially outward area 444. The rotating device coupled to the mandrel end (e.g., rotating balls 425 and/or rollers 435) may contact bolt hole circumference 445. The mandrel may be rotated in response to being inserted into bolt hole circumference 445.

The material proximate bolt hole circumference 445 may be plastically deformed (step 610), therefore strengthening such material, in response to inserting the mandrel into bolt hole 440. The plastic deformation may cause bolt hole circumference 445 to expand, expanding the diameter of bolt hole 440 (step 612) from an original bolt hole diameter (e.g., original diameter 254 in FIG. 3B) to a deformed bolt hole diameter (e.g., deformed bolt hole diameter 256 in FIG. 3B). The deformed bolt hole diameter may be about 0.030 inch (0.076 cm) greater than the original bolt hole diameter (as used in this context, the term "about" means within plus or minus 0.010 inch (0.025 cm)).

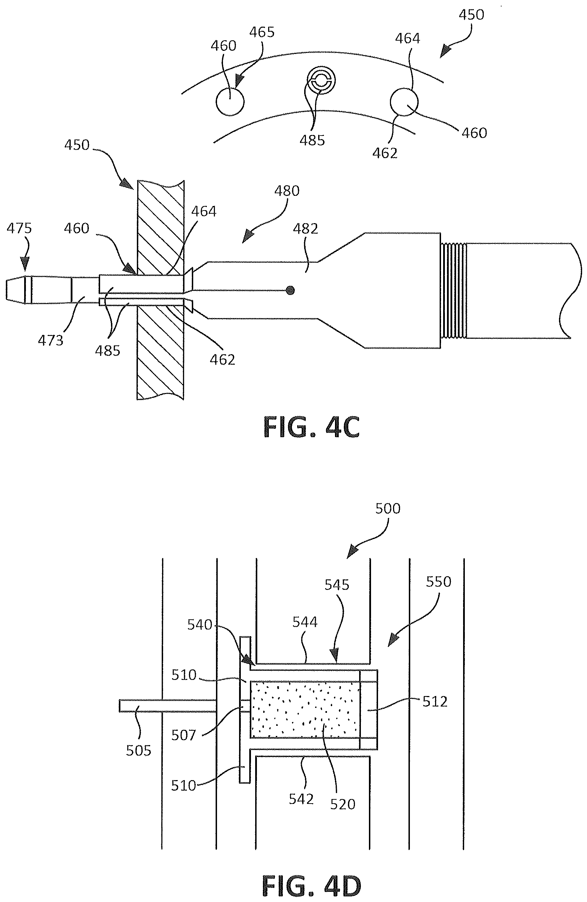

With combined reference to FIGS. 4C and 6 the mandrel (e.g., mandrel 473) may be comprised in a system 480 for split sleeve treating a bolt hole (e.g., bolt hole 460 of M-flange 450). Split sleeve system 480 may comprise an actuator 482 configured to project and/or retract mandrel 473. Mandrel 473 may be inserted into bolt hole 460 (step 608) such that the outer edge of the mandrel contacts bolt hole circumference 465, including radially inward area 462 and radially outward area 464. Mandrel 473 may comprise an enlarged end 475 which has a diameter larger than other portions of mandrel 473. The circumference of enlarged end 475 may be larger than bolt hole circumference 465. The outer edge that contacts bolt hole circumference 465 may be comprised on enlarged end 475, and therefore the greater circumference of enlarged end 475 may apply a radially outward pressure within bolt hole 460 on bolt hole circumference 465. A split sleeve comprising split sleeve halves 485 may be disposed into bolt hole 460 (step 606), and mandrel 473 may be inserted into the split sleeve. The radially outward pressure applied by enlarged end 475 may comprise split sleeve halves 485 being pressed against bolt hole circumference 465.

With continued reference to FIGS. 4C and 6, the radially outward pressure applied by enlarged end 475 may cause the material proximate bolt hole circumference 465 to be plastically deformed (step 610). The plastic deformation may cause bolt hole circumference 465 to expand, expanding the diameter of bolt hole 460 (step 612) from an original bolt hole diameter (e.g., original diameter 254 in FIG. 3B) to a deformed bolt hole diameter (e.g., deformed bolt hole diameter 256 in FIG. 3B). The deformed bolt hole diameter may be between about 0.050 and about 0.100 inch (between 0.127 and 0.254 cm) greater than the original bolt hole diameter. As used in this context, the term "about" means within plus or minus 0.020 inch (0.051 cm).

With combined reference to FIGS. 4B, 4C, and 6, whether performing method 600 with burnishing system 405 or split sleeve system 480, the mandrel may be heated (step 604) before insertion into bolt hole circumference 445 or 465. Heating the mandrel before insertion may allow less pressure to be applied by the mandrel to bolt hole circumference 445 or 465 in order to plastically deform the material proximate bolt hole circumference 445 or 465.

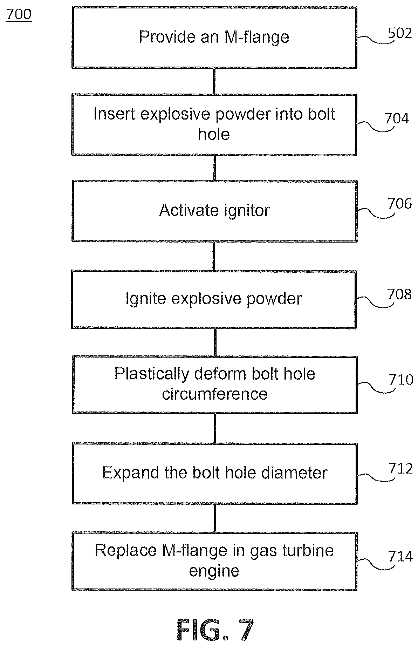

M-flange 400 or 450 comprising plastically deformed bolt holes may be replaced on a gas turbine engine (step 614). The plastically deformed bolt holes may increase the strength of the material proximate bolt hole circumference 445 or 465. Method 600 implementing burnishing system 405 may improve the life of M-flange 400 by between three and four times when utilized in a gas turbine engine (e.g., from 6,500 engine cycles to between 19,500 and 26,000 engine cycles, wherein an engine cycle comprises a flight of the aircraft comprising the gas turbine engine). Method 600 implementing split sleeve system 480 may improve the life of M-flange 450 by between five and ten times when utilized in a gas turbine engine (e.g., from 6,500 engine cycles to between 32,500 and 65,000 engine cycles, wherein an engine cycle comprises a flight of the aircraft comprising the gas turbine engine). FIG. 7 depicts a block diagram illustrating a method 700 of treating an M-flange falling outside the scope of the claims. With combined reference to FIGS. 4D and 7, an M-flange 500 (similar to M-flange 200 in FIG. 2) may be obtained, manufactured, and/or provided (step 502), as explained in relation to FIG. 5. A system 550 for treating a bolt hole 540 of M-flange 500 may comprise an explosive material 520. Explosive material (e.g., an explosive powder) may be any suitable material including black powder, smokeless gun powder, or the like. Explosive material 520 may be inserted into bolt hole 540 (step 704). Explosive powder may be encased in a casing 510 comprising any suitable material (e.g., a metal material). Casing 510 may comprise a cap 512 enclosing explosive material 520.

Explosive material 520 may be ignited (step 708), such that the resulting explosion within bolt hole 540 applies a force radially outward of bolt hole 540 on bolt hole circumference 545, including radially inward area 542 and radially outward area 544. Such a force may be applied to bolt hole circumference 545 by casing 510 if explosive material 520 is encased in a casing 510. Explosive material 520 may be ignited by activation of an ignitor 507 (step 706). Ignitor 507 may be electrically activated and/or mechanically activated (e.g., by a firing pin 505 striking ignitor 507).

The material proximate bolt hole circumference 545 may be plastically deformed (step 710), therefore strengthening such material. The plastic deformation may cause bolt hole circumference 545 to expand, expanding the diameter of bolt hole 540 (step 712) from an original bolt hole diameter (e.g., original diameter 254 in FIG. 3B) to a deformed bolt hole diameter (e.g., deformed bolt hole diameter 256 in FIG. 3B). The heat from the explosion of explosive material 520 may allow less pressure to be applied to bolt hole circumference 545 in order to plastically deform the material proximate bolt hole circumference 545. M-flange 500 comprising plastically deformed bolt holes may be replaced on a gas turbine engine (step 714). The plastically deformed bolt holes may increase the strength of the material proximate bolt hole circumference 545.

The systems and methods described herein are discussed in relation to an M-flange of a gas turbine engine. However, it should be understood that the systems and methods described herein may be applied to any flange (e.g., static flange or a fixed flange) of a gas turbine engine, or other engine or system.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method, comprising:
providing a flange (200; 300; 350) of a gas turbine engine, wherein the flange (200; 300; 350) comprises a bolt hole (240; 340) therethrough defined by a bolt hole circumference (245; 345) between an inner diameter (204) and an outer diameter (202) of the flange (200; 300; 350), wherein the bolt hole circumference (245; 345) comprises a radially outward area (244; 344) proximate the outer diameter (202) and a radially inward area (242; 342) proximate the inner diameter (204);
heating a plurality of shot (362);
applying the heated plurality of shot (362) to the bolt hole circumference (245; 345); and
plastically deforming the bolt hole circumference (245; 345) to strengthen the bolt hole circumference (245; 345) in response to the applying the heated plurality of shot (362), producing a plastically deformed bolt hole (240; 340);
**characterised in that**:
the applying the heated shot (362) to the bolt hole circumference (245; 345) comprises applying the heated shot (362) only to the radially inward area (242; 342) of the bolt hole circumference (245; 345).

2. The method of claim 1, wherein the plurality of shot (362) comprises a plurality of metal beads.

3. The method of claim 1 or 2, further comprising expanding an original bolt hole diameter defined by the bolt hole circumference (245; 345) to a deformed bolt hole diameter, wherein the deformed bolt hole diameter is about 0.010 inch (0.025 cm) greater than the original bolt hole diameter.

4. The method of any preceding claim, wherein the providing the flange (200; 300; 350) comprises removing the flange (200; 300; 350) from the gas turbine engine (100).

5. The method of claim 4, comprising replacing the flange (200; 300; 350) comprising the plastically deformed bolt hole (240; 340) onto the gas turbine engine (100).

6. The method of any preceding claim, wherein the providing the flange (200; 300; 350) comprises providing the flange (200; 300; 350) comprising a scallop (252) disposed on the outer diameter of the flange (200; 300; 350).

## Patentansprüche

1. Verfahren, umfassend:
Bereitstellen eines Flansches (200; 300; 350) eines Gasturbinentriebwerks, wobei der Flansch (200; 300; 350) ein Bolzenloch (240; 340) dort hindurch umfasst, das durch einen Bolzenlochumfang (245; 345) zwischen einem Innendurchmesser (204) und einem Außendurchmesser (202) des Flansches (200; 300; 350) definiert ist, wobei der Bolzenlochumfang (245; 345) einen radial auswärtigen Bereich (244; 344) neben dem Außendurchmesser (202) und einen radial einwärtigen Bereich (242; 342) neben dem Innendurchmesser (204) umfasst;
Erwärmen einer Vielzahl von Schuss (362);
Anwenden der erwärmten Vielzahl von Schuss (362) auf den Bolzenlochumfang (245; 345); und
plastisches Verformen des Bolzenlochumfangs (245; 345), um den Bolzenlochumfang (245; 345) zu stärken, als Reaktion auf das Anwenden der erwärmten Vielzahl von Schuss (362), wodurch ein plastisch verformtes Bolzenloch (240; 340) erzeugt wird;
**dadurch gekennzeichnet, dass**:
das Anwenden des erwärmten Schusses (362) auf den Bolzenlochumfang (245; 345) das Anwenden des erwärmten Schusses (362) ausschließlich auf den radial einwärtigen Bereich (242; 342) des Bolzenlochumfangs (245; 345) umfasst.

2. Verfahren nach Anspruch 1, wobei die Vielzahl von Schuss (362) eine Vielzahl von Metallkugeln umfasst.

3. Verfahren nach Anspruch 1 oder 2, ferner umfassend das Expandieren eines ursprünglichen Bolzenlochdurchmessers, der durch den Bolzenlochumfang (245; 345) definiert ist, zu einem verformten Bolzenlochdurchmesser, wobei der verformte Bolzenlochdurchmesser etwa 0,010 Inch (0,025 cm) größer als der ursprüngliche Bolzenlochdurchmesser ist.

4. Verfahren nach einem vorhergehenden Anspruch, wobei das Bereitstellen des Flansches (200; 300; 350) das Entfernen des Flansches (200; 300; 350) von dem Gasturbinentriebwerk (100) umfasst.

5. Verfahren nach Anspruch 4, umfassend das Ersetzen des Flansches (200; 300; 350), der das plastisch verformte Bolzenloch (240; 340) umfasst, auf dem Gasturbinentriebwerk (100) .

6. Verfahren nach einem vorhergehenden Anspruch, wobei das Bereitstellen des Flansches (200; 300; 350) das Bereitstellen des Flansches (200; 300; 350) umfasst, der eine Ausbogung (252) umfasst, die an dem Außendurchmesser des Flansches (200; 300; 350) angeordnet ist.

## Revendications

1. Procédé, comprenant :
la fourniture d'une bride (200 ; 300 ; 350) d'un moteur à turbine à gaz, dans lequel la bride (200 ; 300 ; 350) comprend un trou de boulon (240 ; 340) à travers celle-ci défini par une circonférence de trou de boulon (245 ; 345) entre un diamètre intérieur (204) et un diamètre extérieur (202) de la bride (200 ; 300 ; 350), dans lequel la circonférence de trou de boulon (245 ; 345) comprend une zone radialement vers l'extérieur (244 ; 344) à proximité du diamètre extérieur (202) et une zone radialement vers l'intérieur (242 ; 342) à proximité du diamètre intérieur (204) ;
le chauffage d'une pluralité de grenaille (362) ;
l'application de la pluralité de grenaille chauffée (362) sur la circonférence de trou de boulon (245; 345) ; et
la déformation plastique de la circonférence de trou de boulon (245 ; 345) pour renforcer la circonférence de trou de boulon (245 ; 345) en réponse à l'application de la pluralité de grenaille chauffée (362), produisant un trou de boulon déformé plastiquement (240 ; 340) ;
**caractérisé en ce que** :
l'application de la grenaille chauffée (362) à la circonférence de trou de boulon (245 ; 345) comprend l'application de la grenaille chauffée (362) uniquement sur la zone radialement vers l'intérieur (242 ; 342) de la circonférence de trou de boulon (245 ; 345).

2. Procédé selon la revendication 1, dans lequel la pluralité de grenaille (362) comprend une pluralité de billes métalliques.

3. Procédé selon la revendication 1 ou 2, comprenant en outre la dilatation d'un diamètre de trou de boulon d'origine défini par la circonférence de trou de boulon (245 ; 345) à un diamètre de trou de boulon déformé, dans lequel le diamètre de trou de boulon déformé est environ 0,010 pouce (0,025 cm) supérieur au diamètre de trou de boulon d'origine.

4. Procédé selon une quelconque revendication précédente, dans lequel la fourniture de la bride (200 ; 300 ; 350) comprend le retrait de la bride (200 ; 300 ; 350) du moteur à turbine à gaz (100).

5. Procédé selon la revendication 4, comprenant le remplacement de la bride (200 ; 300 ; 350) comprenant le trou de boulon déformé plastiquement (240 ; 340) sur le moteur à turbine à gaz (100).

6. Procédé selon une quelconque revendication précédente, dans lequel la fourniture de la bride (200 ; 300 ; 350) comprend la fourniture de la bride (200 ; 300 ; 350) comprenant un feston (252) disposé sur le diamètre extérieur de la bride (200 ; 300 ; 350).
